# EUROPEAN PATENT APPLICATION

(11) **EP 4 779 631 A1**
(43) Date of publication of application: **22.07.2026**
(21) Application number: 24882699.2
(22) Date of filing: 08.10.2024
(51) Int. Cl.: G10L 15/26, G10L 15/22, G10L 25/63, G06F 3/16, G06F 40/279, G06F 40/30, G06F 16/34, G06N 20/00

(54) **ELECTRONIC DEVICE AND METHOD FOR GENERATING PROMPT FOR TRAINING ELECTRONIC DEVICE**

(30) Priority: 24.10.2023 KR 20230143122; 28.11.2023 KR 20230167553
(71) Applicant: Samsung Electronics Co., Ltd., Suwon-si, Gyeonggi-do 16677 (KR)
(72) Inventor: LEE, Sanghyun, Suwon-si, Gyeonggi-do 16677 (KR); KIM, Kyungtae, Suwon-si, Gyeonggi-do 16677 (KR); SHIN, Hoseon, Suwon-si, Gyeonggi-do 16677 (KR); YOON, Jaeyeun, Suwon-si, Gyeonggi-do 16677 (KR); JO, Hyeoncheon, Suwon-si, Gyeonggi-do 16677 (KR); HWAN, Dongchoon, Suwon-si, Gyeonggi-do 16677 (KR)
(74) Representative: Gulde & Partner
(86) International application number: PCT/KR2024/015258
(87) International publication number: WO 2025/089671

(57) **Abstract**

This electronic device may comprise a processor, a memory, and an artificial intelligence learning model. The processor may execute the one or more instructions stored in the memory to: perform automatic speech recognition to generate call content between user terminals as text; provide the generated text and/or messages exchanged between the user terminals as an input to the artificial intelligence learning model; apply a different summary ratio for each speaker on the basis of the relationship between the user terminals in a process for summarizing the input text in the artificial intelligence learning model; and output summary information about the input text by using the artificial intelligence learning model.

## Description

### [Technical Field]

The disclosure relates to an electronic device and, for example, to a method for generating a prompt for natural language command processing of an artificial intelligence information processing system and managing personal data for learning.

### [Background Art]

In line with recent development of artificial intelligence (Al) technology and improved mobile terminal computing capability, AI technology has been used in various fields of mobile terminals. Numerous devices such as smartphones, wearable devices, TVs, smart home appliances, and AI speakers may each include a learning model for performing various functions such as device operations, measurement, result prediction, content recommendation, and decision making. Such models may be mounted in the early stages of device production and used, or may be continuously maintained for better performance through learning model updates from servers.

According to AI technology application in existing mobile environments, AI models are pretrained in server environments by using a large amount of data, and only inference is performed in mobile terminals, based on the trained AI models. A typical example is to identify an input image through an AI model. Recently, the range of application has been gradually increased such that, in addition to inference by trained AI models, user input data is collected to train personalized AI models, which are used for mobile terminals.

Recently, there have been active attempts to recognize a user's utterance by using an automatic speech recognition (ASR) model and to control the function or operation of an electronic device based on text data corresponding to the utterance. An automatic speech recognition model may be generated by using deep learning technology which uses an algorithm that autonomously classifies and learns the features of input data, in order to recognize and apply and/or process human languages and/or characters.

The above-described information may be provided as related art for the purpose of helping understanding of the disclosure. No claim or determination is made with regard to whether any of the above-described content is applicable as prior art related to the disclosure.

### [Disclosure of Invention]

### [Technical Problem]

A large language model (LLM), which is one of the AI deep learning algorithms, provides functions of pre-training large-scale data sets and deriving responses to inputs regarding various questions under the influence of large-scale data sets.

Since the LLM is a generative model trained using various large-scale data sets, responses to user inputs are not uniform, and the quality of responses may vary depending on the type of questions. Prompts may refer to instructions and context information transferred to models to achieve tasks desired by users as inputs to the LLM.

An artificial intelligence learning model may output different results according to the prompt configuration. A prompt may be divided into a part input by the user (user_input_prompt) and a part injected by the system (hidden prompt). The hidden prompt currently injected by the current system stores data for each time period, and pieces of information among the same may be used to generate a result regarding the input at the current timepoint. This scheme has a limitation in that it is difficult to identify individual preferences or tendencies.

An electronic device may include a processor, a memory, and an artificial intelligence learning model. The processor may execute the one or more instructions stored in the memory to perform automatic speech recognition to generate text from content of conversation between user terminals, provide generated text and/or messages exchanged between user terminals to the artificial intelligence learning model as inputs, apply a different summarization ratio to each speaker, based on the relationship between user terminals, in a process of summarizing input text by the artificial intelligence learning model, and output summary information regarding input text by using the artificial intelligence learning model.

An electronic device may include a processor, a memory, and an artificial intelligence learning model. The processor may execute the one or more instructions stored in the memory to output summary information and emotion information with regard to text input to the artificial intelligence learning model, provide output summary information and emotion information again to the artificial intelligence learning model as inputs and output keyword information, and provide summary information and the keyword information again to the artificial intelligence learning model as inputs, generate a prompt, and generate a response to a user's question and/or generate a question regarding the user of the electronic device.

A method for operating an electronic device may include: performing an automatic speech recognition function with regard to content of conversation between user terminals to generate text from content of conversation between user terminals; providing generated text and/or messages exchanged between user terminals to an artificial intelligence learning model as inputs; applying a different summarization ratio to each speaker, based on the relationship between user terminals, in a process of summarizing input text by the artificial intelligence learning model; outputting summary information regarding input text and emotion information corresponding to input text by using the artificial intelligence learning model; and providing output summary information and emotion information again to the artificial intelligence learning model as inputs, thereby outputting keyword information by using a preconfigured prompt.

An electronic device and a method for generating a prompt for learning of an electronic device according to the disclosure may use an artificial intelligence learning model (e.g., large language model) to selectively summarize personal data (e.g., call records, messengers), generate a hidden prompt, and generate a response or question suitable for the user's personal situation.

An electronic device and a method for generating a prompt for learning of an electronic device according to the disclosure may apply a different summarization ratio according to the relationship with the counterpart in a situation of summarizing personal data (e.g., call records, messengers) by using an artificial intelligence learning model (e.g., a large language model) such that data is managed differently.

### [Brief Description of Drawings]

Fig. 1 is a block diagram illustrating an electronic device 101 in a network environment 100 according to various embodiments.
FIG. 2 is a block diagram of an electronic device and a server according to various embodiments.
FIG. 3A and FIG. 3B are block diagrams illustrating the structure of an electronic device according to an embodiment.
FIG. 4A illustrates a process of generating a keyword corresponding to an emotion on an artificial intelligence learning model according to an embodiment.
FIG. 4B illustrates a process in which an artificial intelligence learning model according to an embodiment outputs summary information and keyword information by using initial data and new data.
FIG. 4C illustrates the structure of summary information and keyword information among personal data.
FIG. 5A and FIG. 5B illustrate processes of generating summary data and keyword data by an artificial intelligence learning model according to an embodiment.
FIG. 6A illustrates a situation in which summary data stored by date is displayed on an electronic device according to an embodiment.
FIG. 6B illustrates a process in which an electronic device according to an embodiment recognizes a user's question and generates a response using summary data stored by date.
FIG. 7 is a diagram for describing operations of an electronic device based on a personalized automatic voice recognition model according to various embodiments.
FIG. 8 is a flowchart illustrating a method for generating a prompt for learning of an electronic device according to an embodiment.
FIG. 9 is a flowchart illustrating a method for generating a prompt for learning of an electronic device according to an embodiment.

### [Mode for the Invention]

Hereinafter, embodiments of the disclosure will be described in detail with reference to the accompanying drawings so that those skilled in the art to which the disclosure pertains may easily implement the same. However, the disclosure may be implemented in various different forms, and is not limited to the embodiments described herein. In describing the drawings, the same or similar elements may be denoted by the same or similar reference numerals. In addition, in the drawings and related descriptions, descriptions of well-known functions and configurations may be omitted for clarity and brevity.

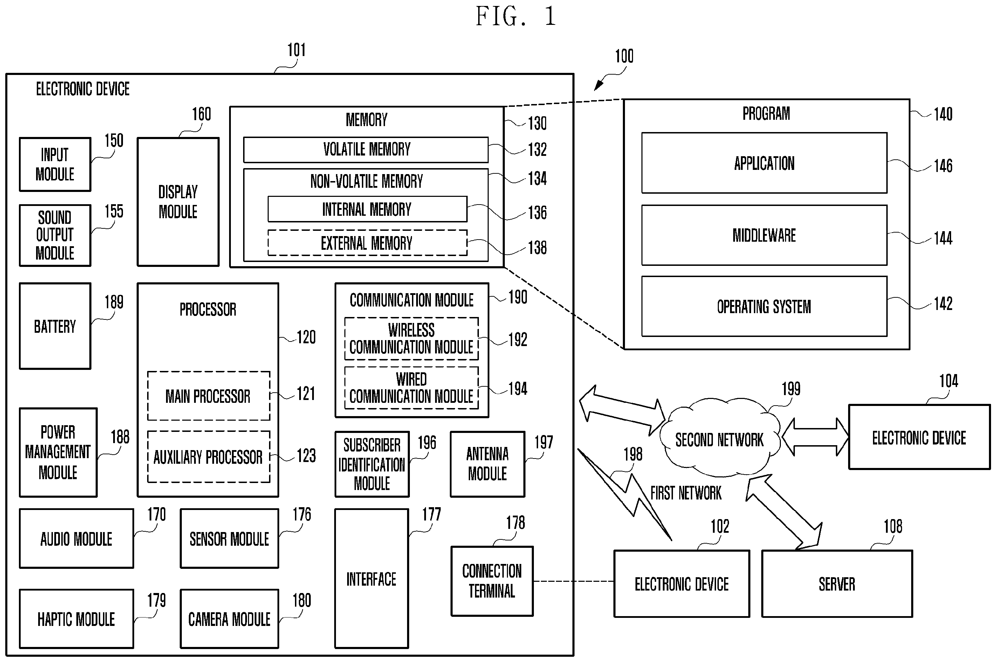

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

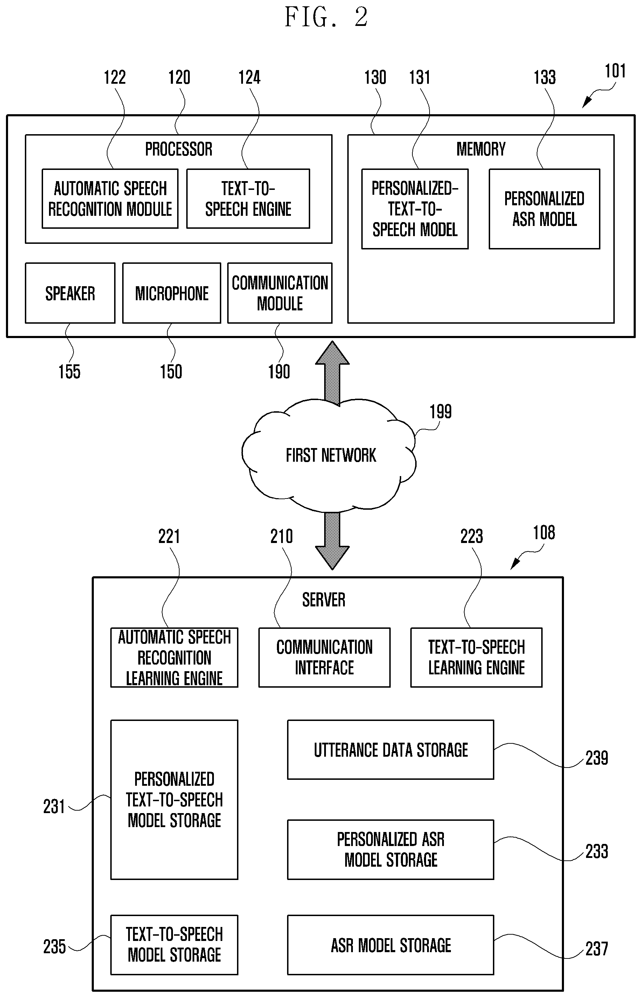

FIG. 2 is a block diagram of an electronic device (e.g., the electronic device 101 in FIG. 1) and a server (e.g., the server 108 in FIG. 1) according to various embodiments.

Referring to FIG. 2, the electronic device 101 may include a processor (e.g., the processor 120 in FIG. 1), a memory (e.g., the memory 130 in FIG. 1), a microphone (e.g., the input module 150 in FIG. 1), a speaker (e.g., the sound output module 155 in FIG. 1), and/or a communication module (e.g., the communication module 190 in FIG. 1).

According to an embodiment, the processor 120 may include an automatic speech recognition (ASR) module 122 and/or a text-to-speech (TTS) engine 124. According to an embodiment, the automatic speech recognition module 122 may convert the user's utterance speech input received through the microphone 150 into text data. According to an embodiment, the text-to-speech engine 124 may change text-type information into speech-type information. According to an embodiment, the processor 120 may output the changed speech-type information through the speaker 155. Referring to FIG. 2, the automatic speech recognition module 122 and the text-to-speech engine 124 are illustrated as being implemented as part of the processor 120, but the disclosure is not limited thereto. For example, the automatic speech recognition module 122 and the text-to-speech engine 124 may be implemented as instructions which are stored in the memory 130 and are loaded from the memory 130 by the processor 120.

According to various embodiments, the processor 120 may recognize a designated user's utterance speech by using a personalized automatic speech recognition model 133. According to an embodiment, the processor 120 may include an automatic speech recognition module 122 in order to recognize a designated user's utterance speech by using the personalized automatic speech recognition model 133.

According to an embodiment, the personalized automatic speech recognition model 133 may include an acoustic model and/or a language model, and may be trained to recognize a designated user's speech data and convert the same to text data. For example, the acoustic model may include articulation-related information, and the language model may include unit phoneme information and information regarding a combination of unit phoneme information.

According to various embodiments, the personalized automatic speech recognition model 133 may be generated as a personalized model by training or updating an automatic speech recognition model (not illustrated) so as to recognize a designated user's utterance speech.

According to various embodiments, the personalized automatic speech recognition model 133 may be generated as a personalized model by training or updating an automatic speech recognition model (not illustrated) so as to recognize utterance speech regarding designated text including at least one word from the designated user.

According to various embodiments, the personalized automatic speech recognition model 133 may be trained to recognize a designated user's utterance speech regarding text including at least one designated word, such as "Hi! Bixby", which has been designated as a wakeup word for a wakeup command for activating an intelligent speech recognition service.

According to an embodiment, the processor 120 of the electronic device 101 may recognize a wakeup command through the automatic speech recognition module 122.

According to an embodiment, the processor 120 of the electronic device 101 may include a wakeup speech recognition module (not illustrated) for recognizing the designated user's wakeup speech.

According to an embodiment, the wakeup speech recognition module may be implemented in a low-power processor (e.g., the auxiliary processor 123 in FIG. 1) such as a processor included in an audio codec. According to an embodiment, the wakeup speech recognition module may be activated by an utterance input regarding a wakeup word and/or a user input through hardware keys.

According to various embodiments, the automatic speech recognition module 122 including a wakeup speech recognition module may recognize a user speech input by using an automatic speech recognition algorithm. The algorithm used for speech recognition may be, for example, at least one of a hidden Markov model (HMM), an artificial neural network (ANN), or dynamic time warping (DTW).

According to various embodiments, the personalized automatic speech recognition model 133 may be generated by updating an automatic speech recognition model (not illustrated) by performing machine learning using multiple pieces of speech generated with regard to each designated text including at least one word based on a designated user's speech.

According to an embodiment, the personalized automatic speech recognition model 133 may be trained by using multiple pieces of speech generated with regard to each designated text including at least one word based on a designated user's speech, together with the designated user's speech utterance speech.

According to various embodiments, the personalized automatic speech recognition model 133 may be generated by training an automatic speech recognition model (not illustrated) using multiple pieces of speech generated with regard to each designated text, based on a designated user's speech. According to an embodiment, the personalized automatic speech recognition model 133 may be trained by using multiple pieces of speech generated with regard to each designated text, based on designated user speech, together with the user's utterance speech regarding designated text.

According to various embodiments, as an automatic speech recognition method (or an automatic speech recognition algorithm), at least one of a hidden Markov model (HMM)-based method, an artificial neural network (ANN)-based method, a support vector machine (SVM)-based method, or a dynamic time warping (DTW)-based method may be used, but the same is not limited thereto. Different automatic speech recognition models may be referenced according to the automatic speech recognition method.

According to an embodiment, a deep neural network-hidden Markov model (DNN-HMM) may be used as the automatic speech recognition method. In the DNN-HMM-based automatic speech recognition method, an acoustic model (AM) may be modeled using a DNN, and a language model (LM) may be modeled using an HMM.

According to an embodiment, in case that the DNN-HMM is used as a speech recognition algorithm, the AM or LM may be modified to personalize (update) the automatic speech recognition model. The AM modifying method may be implemented by adding an adaptation layer after the last layer of the neural network used for the AM model.

According to various embodiments, there may be a method of modifying the LM to personalize the automatic speech recognition model. It may be possible to personalize the automatic speech recognition model by modifying the pronunciation model (PM) which expresses words as a phoneme sequence (or senone sequence) in the LM as well. As described above, in the DNN-HMM, a linguistic expression may be implemented as a weighted finite state transducer (wFST). By updating FST (or finite state acceptor (FSA)) information that expresses pronunciation, among the FSTs constituting the entire LM, the pronunciation regarding a designated word may be personalized. For example, the FST of a designated word of the PM may be modified, or a weight may be applied to the arc of the FST.

According to various embodiments, the personalized automatic speech recognition model 133 may be generated by performing machine learning by the processor 120 of the electronic device 101, or a model that has undergone machine learning by the server 108 may be received by the electronic device 101 through the communication module 190 and then stored in the memory 130.

According to various embodiments, multiple pieces of speech regarding designated text, which is based on designated user speech, may be generated by using a personalized-text-to-speech (TTS) model 131 constructed by the designated user's speech (or trained based on the designated user's speech).

According to various embodiments, the personalized text-to-speech model 131 constructed by the designated user's speech may include a speech synthesis model (not shown) that generates the designated user's speech. According to an embodiment, the personalized text-to-speech model 131 may be generated by performing an operation of acquiring at least a predetermined amount of utterance speech of {text, sound source} pairs from a designated user, and additionally training the speech synthesis model such that speech features extracted from the acquired utterance and speech features generated by the speech synthesis model with regard to the same text become similar. A personalized text-to-speech model 131 constructed through a sufficient number of times of additional training may generate a sound source with a timbre similar to that of the designated user's speech.

According to an embodiment, the personalized text-to-speech model 131 may be constructed by the server 108. For example, the server 108 may receive a designated user's utterance speech of {text, sound source} pair from the electronic device 101, and may generate a personalized text-to-speech model 131 by performing learning using the same.

According to an embodiment, the electronic device 101 may receive a personalized text-to-speech model 131 from the server 108 through the communication module 190 and may store the same in the memory 130, if necessary.

According to various embodiments, multiple pieces of speech regarding designated text based on designated user speech may be generated by using a personalized text-to-speech model 131 constructed by the designated user's speech.

According to various embodiments, multiple pieces of speech based on designated user speech or multiple pieces of speech regarding designated text based on designated user speech may be generated by the processor 120 of the electronic device 101 or generated by the server 108.

According to various embodiments, multiple pieces of speech based on designated user speech or multiple pieces of speech regarding designated text based on designated user speech may include the designated user's utterance speech and may be received through the microphone 150, for example.

According to various embodiments, the processor 120 may perform a speech preprocessing operation with regard to the user's utterance speech data. For example, the processor 120 may include an adaptive echo canceller (AEC) module (not illustrated), a noise suppression (NS) module (not illustrated), an end-point detection (EPD) module (not illustrated), or an automatic gain control (AGC) module (not illustrated). The adaptive echo canceller module may remove echoes included in the user utterance speech. The noise suppression module may suppress background noise included in the user utterance speech. The end-point detection module may detect the end point of user speech included in the user utterance speech to find a portion where the user's speech exists. The automatic gain control module may adjust the volume of the user utterance speech to be suitable for recognizing and processing the user's utterance speech.

According to an embodiment, in case that a personalized text-to-speech model 131 constructed based on a designated user's speech is stored, for example, in the memory 130 of the electronic device 101, the processor 120 may generate multiple pieces of speech sound based on designated user speech or multiple sound sources regarding designated text based on the designated user's speech by using the personalized text-to-speech model 131 constructed based on the designated user's speech.

According to an embodiment, the processor 120 of the electronic device 101 may generate multiple sound sources regarding a designated script, for example, by using a personalized text-to-speech model 131 constructed using the designated user's speech. For example, the designated script may include an arbitrary set of sentences, and may prepared to match a phonetic balance, or may include news sentences or text sentences extracted from the user's usual speech input through an application, such as a call application.

According to an embodiment, the processor 120 of the electronic device 101 may include a text-to-speech (TTS) engine 124 for generating multiple sound sources based on designated user speech or multiple sound sources regarding designated text based on the designated user's speech.

According to various embodiments, the server 108 may include a communication interface 210, an automatic speech recognition learning engine 221, a text-to-speech learning engine 223, a personalized text-to-speech model storage 231, a personalized automatic speech recognition model storage 233, a text-to-speech model storage 235, an automatic speech recognition model storage 237, and/or an utterance data storage 239.

According to various embodiments, the processor 120 of the electronic device 101 or the server 108 may generate multiple sound sources by modifying at least one of the sound duration or pitch of with regard to each phoneme of a phoneme sequence included in designated text including at least one word, based on a stored personalized text-to-speech model 131 or a designated user's personalized text-to-speech model 131 stored in the personalized text-to-speech model storage 231. According to an embodiment, the server 108 may perform a sound source generation operation (described below) through the text-to-speech learning engine 223.

According to various embodiments, a processor 120 of the electronic device 101 or a server 108 may convert text including at least one designated word to a phoneme sequence, and may extract phoneme information necessary for sound source generation, based on the order and/or relationship of phonemes included in the converted phoneme sequence.

According to various embodiments, the processor 120 of the electronic device 101 or the server 108 may determine the number of prosody frames allocated with regard to respective phonemes included in the converted phoneme sequence. Generally, a couple of or tens of prosody frames may be required to pronounce one phoneme.

According to various embodiments, the processor 120 of the electronic device 101 or the server 108 may determine the value of the prosody frames assigned to respective phonemes included in the converted phoneme sequence, by using phoneme information extracted based on the order and/or relationship of phonemes included in the converted phoneme sequence.

According to various embodiments, the processor 120 of the electronic device 101 or the server 108 may convert prosody frame values determined with regard to prosody frames assigned to respective phonemes included in the converted phoneme sequence into a spectrogram value, thereby generating a sound source regarding each phoneme.

According to various embodiments, the processor 120 of the electronic device 101 or the server 108 may receive clustered prosody information corresponding to the converted phoneme sequence and may determine prosody frame values by modifying at least one of the sound duration or pitch of each phoneme, based on the clustered prosody information corresponding to the converted phoneme sequence, in addition to phoneme information extracted based on the order and/or relationship of phonemes included in the converted phoneme sequence. For example, the length of the clustered prosody information may be the same as the length of the converted phoneme sequence. According to an embodiment, the clustered prosody information may be stored in the memory 130 or received from the server 108.

According to an embodiment, the clustered prosody information may be configured such that, in order for a generated sound source has continuous pitch and/or utterance length, the sound duration is subdivided, for example, in 0.01 sec units ranging from about 0.05 sec to about 0.50 sec, thereby including sufficient prosody information regarding each of about 0.01 sec unit lengths. In the case of pitch, subdivided units may range from the lowest pitch to the highest pitch, thereby including sufficient prosody information regarding each unit length. Accordingly, the clustered prosody information may be configured such that there is no lack of example data regarding the designated sound duration and/or pitch.

According to various embodiments, the processor 120 of the electronic device 101 or the server 108 may add various pieces of noise data which may occur in various environments to generated sound sources to use the same for learning. For example, the noise data may be generated by adding an adaptive echo and/or adding noise.

According to various embodiments, sound sources generated by the processor 120 of the electronic device 101 or the server 108 may include sound source data that is significantly different from speech actually uttered by a person.

According to various embodiments, the processor 120 of the electronic device 101, or the automatic speech recognition learning engine 221 and/or the text-to-speech conversion learning engine 223 of the server 108 may filter multiple generated sound sources such that the stored personalized automatic speech recognition model 133 or the designated user's personalized automatic speech recognition model stored in the personalized automatic speech recognition model storage 233 machine-learn the filtered sound sources.

According to various embodiments, the multiple generated sound sources may be filtered based on various schemes and/or criteria.

According to various embodiments, the processor 120 of the electronic device 101, or the automatic speech recognition learning engine 221 and/or the text-to-speech conversion learning engine 223 of the server 108 filter the multiple generated sound sources through a sound quality test based on at least one sound quality test scheme including a perceptual evaluation of speech quality (PESQ). A personalized text-to-speech model according to an embodiment may be generated based on a designated user's utterance speech, and a sound source generated thereby may include various kinds of noise due to the influence of various kinds of noise included in the designated user's utterance speech.

According to an embodiment, the processor 120 of the electronic device 101, or the automatic speech recognition learning engine 221 and/or the text-to-speech conversion learning engine 223 of the server 108 may measure the sound quality of multiple sound sources regarding each designated text generated by the personalized text-to-speech model according to a sound quality measurement scheme, such as PESQ, and may consider that a generated sound source, the measured value of which differs from other sound sources by a threshold value or more is not appropriate for the learning purpose, thereby excluding the same from learning data.

According to various embodiments, the processor 120 of the electronic device 101, or the automatic speech recognition learning engine 221 and/or the text-to-speech conversion learning engine 223 of the server 108 may perform automatic speech recognition with regard to multiple sound sources regarding each designated text that has been generated, thereby converting the same into text, and may compare the converted text with each designated text, thereby filtering the same.

According to an embodiment, the processor 120 of the electronic device 101, or the automatic speech recognition learning engine 221 and/or the text-to-speech conversion learning engine 223 of the server 108 may perform automatic speech recognition, for example, with regard to multiple sound sources regarding each designated text that has been generated, thereby converting the same into text. The multiple generated sound sources are for training a personalized automatic speech recognition model, and if the text recognized through automatic speech recognition is different from the original text, it may be determined that the same cannot be appropriately used to train an automatic speech recognition model for the purpose of improving the actual speech recognition rate.

According to various embodiments, the processor 120 of the electronic device 101, or the automatic speech recognition learning engine 221 and/or the text-to-speech conversion learning engine 223 of the server 108 may perform pitch tracking with regard to multiple sound sources regarding each designated text that has been generated, and may perform filtering with regard to the multiple generated sound sources, based on a designated pitch range. For example, the female vocal range is generally known to be approximately 80 Hz to 400 Hz, and the male vocal range is approximately 60 Hz to 350 Hz. Therefore, by configuring a designated pitch range based on the same, a sound source deviating from the designated pitch range, which is considered to differ from speech actually uttered by the user, may be excluded.

According to various embodiments, the processor 120 of the electronic device 101, or the automatic speech recognition learning engine 221 and/or the text-to-speech conversion learning engine 223 of the server 108 may determine the sound duration regarding each phoneme included in multiple sound sources regarding each designated text that has been generated, and may perform filtering with regard to the multiple generated sound sources, based on the designated sound duration range. For example, the length of phonemes uttered by people is generally known to be in a range of about 30 ms to about 300 ms, although there may be differences depending on the linguistic characteristics or the speaker's articulation speed. The sound duration range may be accordingly configured based thereon, and sound sources deviating therefrom may be excluded.

According to various embodiments, the processor 120 of the electronic device 101 or the automatic speech recognition learning engine 221 of the server 108 may use multiple sound sources regarding each designated text that has been generated for deep learning performed by the personalized automatic speech recognition model 133 or the designated user's personalized automatic speech recognition model stored in the personalized automatic speech recognition model storage 233.

According to various embodiments, the processor 120 of the electronic device 101 or the automatic speech recognition learning engine 221 of the server 108 may use the designated user's utterance speech, in addition to the multiple sound sources regarding each designated text that has been generated, for deep learning performed by the personalized automatic speech recognition model.

According to various embodiments, the generated personalized automatic speech recognition model may be stored in the memory 130 of the electronic device 101 or in the personalized automatic speech recognition model storage 233 of the server 108.

According to an embodiment, a natural language platform may include an automatic speech recognition (ASR) module, a natural language understanding (NLU) module, a planner module, a natural language generator (NLG) module, and a text-to-speech (TTS) module. At least some of the natural language understanding (NLU), dialog manager, natural language generation (NLG), or action manager may be implemented using an LLM.

According to an embodiment, the automatic speech recognition module may convert a speech input received from the electronic device 101 into text data. According to an embodiment, the natural language understanding module may identify the user's intent by using the text data of the speech input. For example, the natural language understanding module may identify the user's intent by performing a syntactic analysis or a semantic analysis. According to an embodiment, the natural language understanding module may identify the meaning of a word extracted from the speech input by using a linguistic feature (e.g., a grammatical element) of a morpheme or a phrase, and may determine the user's intent by matching the identified meaning of the word to the intent.

According to an embodiment, the natural language generation module may convert designated information into a text type. The information converted into the text type may have the format of natural language utterance. A text-to-speech module of an embodiment may change text-type information into speech-type information.

The electronic device 101 according to the disclosure may use a large language model (LLM)-based natural language action manager module (hereinafter, LLM). The electronic device 101 may use the LLM instead of one of the natural language understanding module (NLU), dialog manager, natural language generator module (NLG), or action manager to perform corresponding functions. A part of the LLM may be implemented on the electronic device 101.

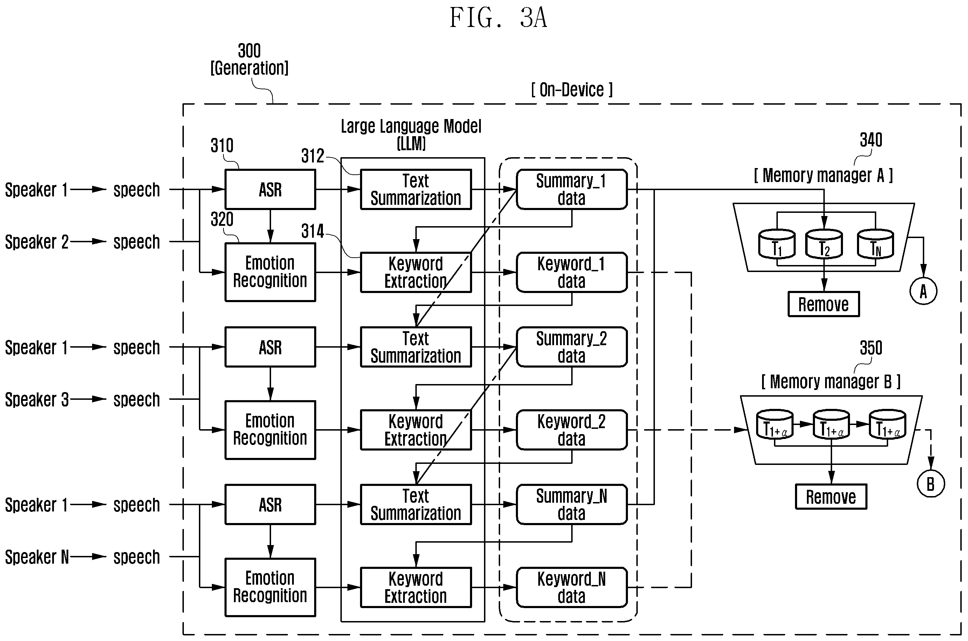

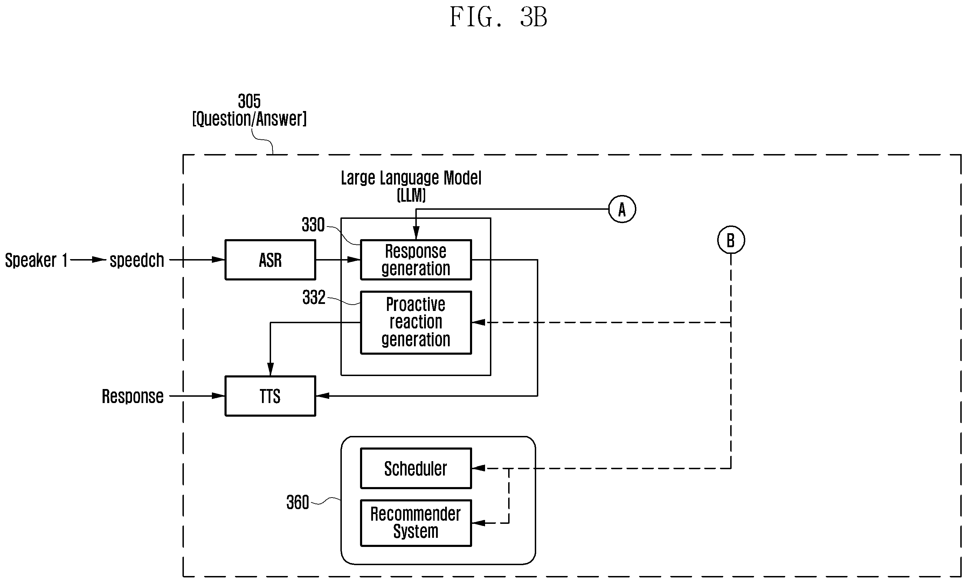

FIG. 3A and FIG. 3B are block diagrams illustrating the configuration of an electronic device according to an embodiment.

According to FIG. 3A, the electronic device (e.g., the electronic device 101 in FIG. 1) may generate (300) summary information and keyword information regarding input text.

According to an embodiment, the processor (e.g., the processor 120 in FIG. 1 and FIG. 2) may perform automatic speech recognition (ASR) 310 by using speech data of speaker 1 and speaker 2. In addition, the processor 120 may perform emotion recognition 320 using speech data of speaker 1 and speaker 2.

According to an embodiment, the processor 120 may perform a text summarization 312 process, based on the result of performing ASR 310. Summary data (summary_1 data) output in the text summarization 312 process may be distinguished with regard to each time at which summarization is performed, and sequentially stored in the memory (e.g., the memory 130 in FIG. 1). Multiple pieces of summary data (e.g., summary_1 data, summary_2 data, and summary_N data) may be distinguished with regard to each time at which summarization is performed, and respectively stored in the memory 130. In this regard, N is a natural number, and the value of N may vary according to the number of pieces of stored summary data.

The processor 120 may perform a keyword extraction 314 process, based on the result of performing emotion recognition 320. Keyword data (keyword_1 data) generated in the keyword extraction process may be distinguished with regard to each time at which summarization is performed, and stored in the memory 130. Multiple pieces of summary data (e.g., keyword_1 data, keyword_2 data, and keyword_N data) may be distinguished with regard to each time at which summarization is performed, and respectively stored in the memory 130. In this regard, N is a natural number, and the value of N may vary according to the number of pieces of stored summary data.

Multiple pieces of summary data (e.g., summary_1 data, summary_2 data, and summary_N data) may be stored in the first memory 340. Multiple pieces of keyword data (e.g., keyword_1 data, keyword_2 data, and keyword_N data) may be stored in the second memory 350 which is physically separated from the first memory 340. According to an embodiment, the first memory 340 for storing multiple pieces of summary data and the second memory 350 for storing multiple pieces of keyword data may be electrically or operatively connected. The processor 120 may load summary data on the first memory 340 and load keyword data on the second memory 350.

The processor 120 may use a large language model (LLM)-based natural language response generation module (hereinafter, referred to as an LLM) in order to construct personal data in the generation 300 process. The LLM may perform a text summarization process 312 and a keyword extraction process 314.

The processor 120 may input stored personal data (e.g., call records, messengers) to the LLM.

The processor 120 may recognize speech during a call between speakers through automatic speech recognition (ASR) 310. The processor 120 may perform a process of converting the recognized speech into text. The processor 120 may store identified speaker information together with converted text. The speaker information may include, for example, whether the telephone number of the counterpart, with which a call connection is established, is stored in the electronic device 101. The artificial intelligence learning model may distinguish the speaker through the communication channel (Tx, Rx) and store converted text. The information regarding the communication counterpart may be acquired through stored contacts information.

The LLM may refer to a language model composed of an artificial neural network that has been pre-trained using a large amount of text data. The LLM may use a transformer artificial neural network structure based on an attention mechanism.

The attention mechanism may be used for a deep learning model, particularly a sequence processing model. The attention mechanism may be mainly used in the field of natural language processing. The LLM may perform output prediction by applying attention-related weights to input data (e.g., data arranged in a time series). Control may be performed such that "attention" is paid to other parts of the input data.

A recurrent neural network (RNN) structure may process each element of a sequence successively. The manner of approach of the RNN structure may be useful in case that the order is important, such as in the case of a sentence or time-series data. However, manner of approach of the RNN structure has limitations in case that information must be transmitted over a long distance.

The attention mechanism may require the model to "attend" to a specific part within the overall context of input data. For example, during a translation task, different words in the sentence may have different degrees of importance in connection with translating the current word. In case of using the attention mechanism, the LLM may select appropriate context associated with each word to improve performance. The transformer is mainly used in the natural language processing field, and may be used as a basic structure of many models including bidirectional encoder representations from transformers (BERT) or generative pre-trained transformer (GPT).

The LLM may perform learning through two stages: pre-training and fine-tuning. Pre-training refers to a process in which the LLM processes this vast amount of text data and acquires general language knowledge. Fine-tuning refers to a process in which the LLM is trained to be suitable for a specific domain (e.g., chatbot, translation, summary, Q&A) or task. The LLM may perform a task with a simple natural language text input, referred to as a prompt.

The LLM may be an on-device-based natural language processing model. The LLM may include, in a prompt, text or emotion labels output through ASR 310 or emotion recognition 320. In the generation 300 process, the LLM may compress and store personal data by using text summarization 312 and/or keyword extraction 314.

According to FIG. 3B, the electronic device 101 may generate a response to a user question, based on multiple pieces of generated summary data (e.g., summary_1 data, summary_2 data, and summary_N data).

The LLM may receive a prompt input, based on the personal data stored in the question/answer 305 process, and generate a response and a question appropriate for the situation. The LLM may be implemented in an on-device type by the electronic device 101 or may be disposed in an external server. Compared to the LLM disposed on the electronic device 101, the LLM disposed in the external server may use a relatively larger amount of memory usage. The LLM disposed in the external server may perform relatively more computations.

According to an embodiment, the processor 120 may receive speech from speaker 1 and convert the same into text by using the ASR model 310. The processor 120 may input the converted text and multiple pieces of summary data (e.g., summary_1 data, summary_2 data, and summary_N data) into an artificial intelligence learning model (e.g., a large language model (LLM)). The processor 120 may perform a response generation 330 process by using the artificial intelligence learning model.

The response generation 330 process may refer to a process of generating a response to the user's question by using multiple pieces of summary data (e.g., summary_1 data, summary_2 data, and summary_N data) on an artificial intelligence learning model.

The processor 120 may generate a question, based on multiple pieces of keyword data (e.g., keyword_1 data, keyword_2 data, and keyword_N data) and emotion-related keywords generated by emotion recognition 320. The processor 120 may input multiple keyword data (e.g., keyword_1 data, keyword_2 data, and keyword_N data) and emotion-related keywords generated by emotion recognition 320 into the artificial intelligence learning model. The processor 120 may perform a proactive reaction generation 332 process by using the artificial intelligence learning model. A proactive response may include question content unrelated to a response to a question received from the user (e.g., "You bought shoes yesterday. Why are you angry?"). The proactive response may include a response to a question that the user has not input. The proactive response may include a response to a question generated by the system in accordance with a specific event, rather than to a question generated by the user's input.

The proactive reaction generation 332 process may refer to a process in which the LLM generates a question by using multiple pieces of keyword data (e.g., keyword_1 data, keyword_2 data, keyword_N data) and emotion-related keywords generated by the emotion recognition 320. Legacy terminals only answered the user's questions, but the electronic device 101 according to the disclosure may generate a question to be asked to the user by using keyword data among personal data.

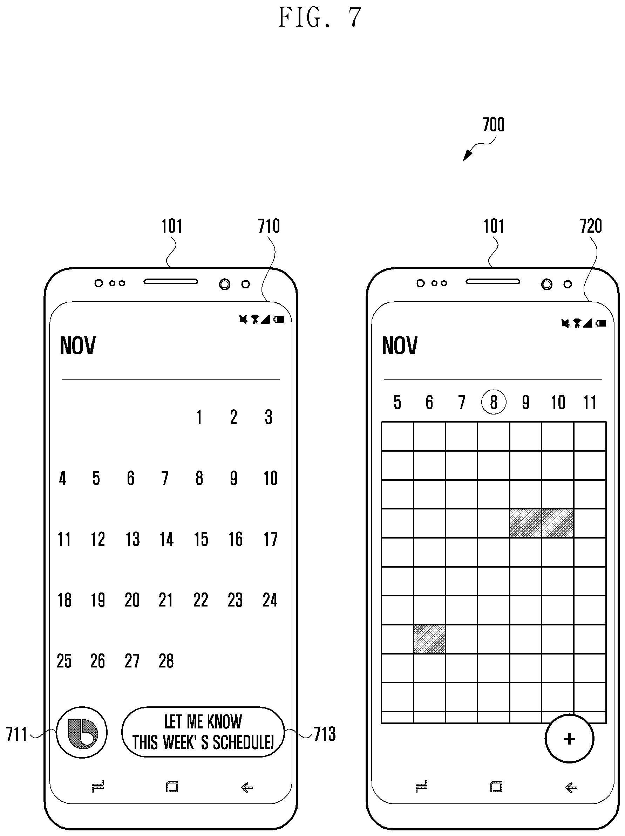

The processor 120 may register content regarding the personal schedule on a scheduler or a recommendation system 360, based on the keyword information output on the artificial intelligence learning model. An embodiment in which the processor 120 stores content regarding the personal schedule on a scheduler based on keyword information output on an artificial intelligence learning model will be described in detail with reference to FIG. 7.

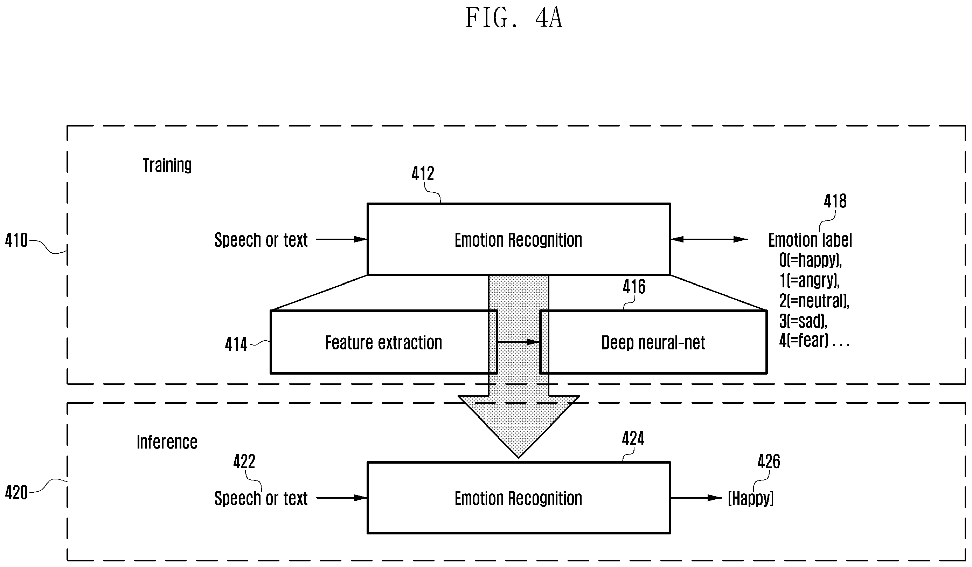

FIG. 4A illustrates a process of generating keywords corresponding to emotions on an artificial intelligence learning model according to an embodiment.

According to FIG. 4A, the processor (e.g., the processor 120 in FIG. 1) may provide the user's speech or message so that the artificial intelligence learning model may perform training 410. The LLM may use ASR to convert the user's speech to text. The artificial intelligence learning model may perform emotion recognition by receiving the converted text as an input.

The feature extraction unit 414 may be used to find important information from data. The feature extraction unit 414 may reduce the size of data, remove unnecessary information or noise, and increase the calculation efficiency. A feature may refer to a core element that represents original data. Features may be used to classify or predict data.

For example, the artificial intelligence learning model may extract features of color, shape, and texture during image processing, and may extract features of word frequency and sentence length during natural language processing. The artificial intelligence learning model may use the extracted features as an input to an algorithm to increase the accuracy of the analysis result.

A deep neural-net 416 is a type of an artificial neural network, and may refer to a complex neural network composed of multiple hidden layers. The deep neural-net 416 may be used to identify complex patterns or relationships.

The deep neural-net 416 may have relatively good performance with regard to a large amount of unstructured data, such as images or natural languages, as compared to other learning models. The deep neural-net 416 may autonomously analyze and understand important features with respect to input data.

Among the deep neural network 416, convolutional neural networks (CNNs) may mainly be used for image classification. Recurrent neural networks (RNNs) or transformer-based structures (e.g., BERT) may be used for sequence and natural language processing tasks.

The LLM may perform an emotion recognition 412 function to generate emotion-related keywords (e.g., happy, angry, sad, and fear) 418, and may generate labels for respective keywords. For example, the LLM may store a keyword corresponding to "happy" as 0 and a keyword corresponding to "angry" as 1.

According to FIG. 4A, the LLM may perform an inference (420) process by receiving the user's speech or message 422 as an input. The inference process of the LLM may refer to an operation of performing prediction regarding new data by using a trained model.

In order to start inference, the LLM may require new input data. Input data may include various types such as images, text, and speech. The input data may be preprocessed into a type that can be processed by the LLM.

The preprocessed input data may pass through the trained LLM. The LLM may perform complex calculation processes while going through each neuron and layer. The LLM may generate an output value. The type of the output value may vary depending on the problem, and may be a class label in the case of a classification problem and may be a continuous numeric value in the case of a regression problem. The LLM may interpret the generated output value to derive the final result. For example, the LLM may output a class having the highest probability value as the final result in the case of a classification problem. In the case of a regression problem, the LLM may determine the output value itself as the final result without any additional processing.

The LLM may perform emotion recognition 424 with regard to the user's speech or message 422. The LLM may perform emotion recognition 424 to output a keyword 426 (e.g., happy) corresponding to the emotion.

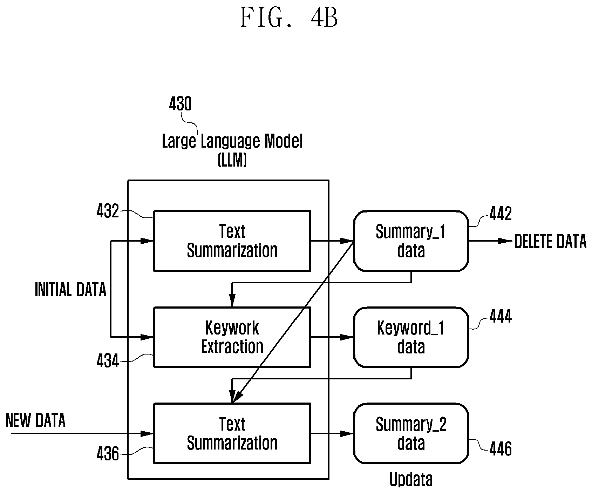

FIG. 4B illustrates a process in which an artificial intelligence learning model outputs summary information and keyword information by using initial data and new data according to an embodiment.

According to FIG. 4B, the LLM 430 may perform a text summarization 432 process and a keyword extraction 434 process by receiving initial data as an input. The LLM 430 may include an artificial intelligence learning model.

The initial data that has undergone ASR may be in a state in which the importance regarding all the sentences has not been selected. The LLM 430 may perform a summarization process with regard to all sentences that have undergone ASR.

The LLM 430 may perform a text summarization 432 process with regard to the input initial data to generate summary data (summary_1 data) 442. The LLM 430 may perform a keyword extraction 434 process by using the input initial data and summary data (summary_1 data) 442. The LLM 430 may perform a keyword extraction 434 process to generate keyword data (keyword_1 data) 444. The processor 120 may store generated keyword data (keyword_1 data) 444 in the memory 130.

Personal data may be subject to restrictions on the period of retention due to security issues. The storage period of keyword data (keyword_1 data) 444 may be relatively longer than that of summary data (summary_1 data) 442.

According to an embodiment, the LLM 430 may receive new data as an input. The new data may include, for example, the user's speech data or messages exchanged with other user terminals. The LLM 430 may perform a text summarization 436 process regarding new data and keyword data (keyword_1 data) 444. The LLM 430 may perform a text summarization 436 process and generate summary data (summary_2 data) 446.

The LLM 430 may perform new summarization by using newly received data and summary data (summary_1 data) 442 or keyword data (keyword_1 data) 444 in a previous time period.

According to an embodiment, the processor 120 may store generated summary data (summary_2 data) 446 in the memory 130. The processor 120 may delete summary data (summary_1 data) 442 stored in the memory 130 in accordance with the elapse of a previously configured period of time.

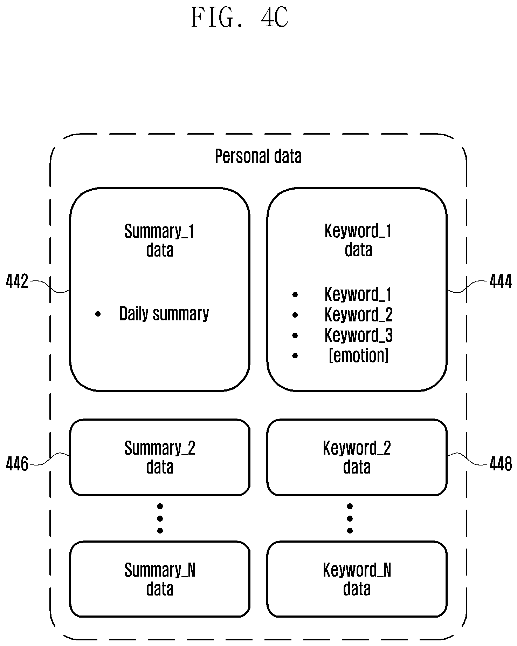

FIG. 4C illustrates the structure of summary information and keyword information among personal data.

According to FIG. 4C, the processor 120 may store summary data (e.g., summary_1 data 442 and summary_2 data 446) output from the LLM 430 in the memory 130. The summary data may be classified differently in time order according to the timepoint at which the same is generated. The summary data may include at least one of emotion recognition information, the location where the conversation occurred, the time when the conversation occurred, or information regarding the speaker.

The processor 120 may store keyword data (e.g., keyword_1 data 444, keyword_2 data 448) output from the LLM 430 in the memory 130. The keyword data may be classified differently in time order according to the timepoint at which the same is generated. The keyword data may include at least one of emotion recognition information, the location where the conversation occurred, the time when the conversation occurred, or information regarding the speaker.

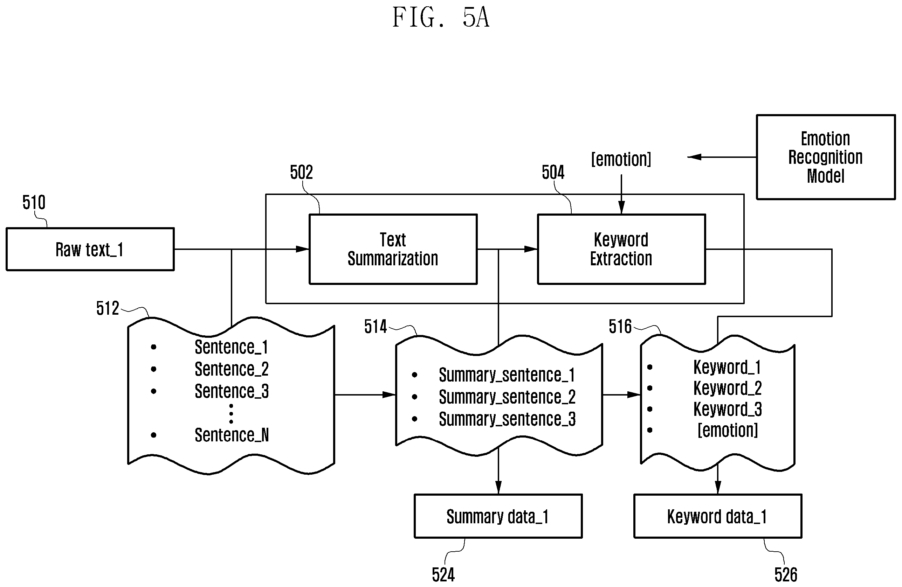

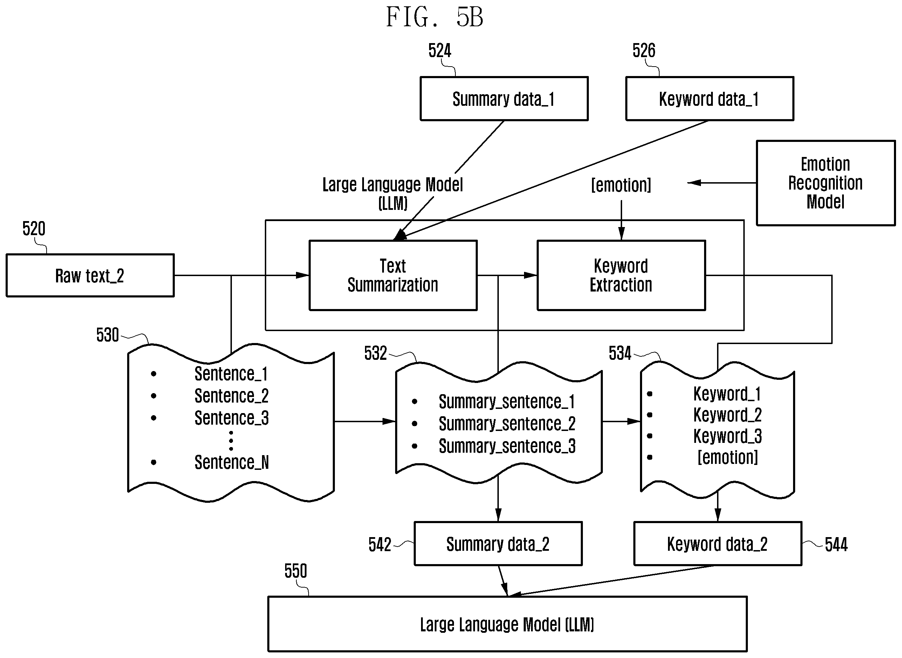

FIG. 5A and FIG. 5B illustrate processes in which an artificial intelligence learning model according to an embodiment generate summary data and keyword data.

According to FIG. 5A, the LLM may receive the user's first data (raw text_1) 510 as input and perform text summarization 502 and keyword extraction 504.

The LLM may display the first data (raw text_1) 510 as text composed of multiple sentences 512 by using the ASR module. The LLM may perform text summarization 502 with regard to multiple sentences 512 and generate multiple summary sentences 514. The LLM may generate summary data (summary data_1)

(524) based on the multiple summary sentences 514. The processor 120 may store summary data (summary data_1) 524 in the memory (e.g., the memory 130 in FIG. 1).

For perform text summarization, the LLM may generate a prompt as in Table 1 and input personal data (e.g., call records and messengers).

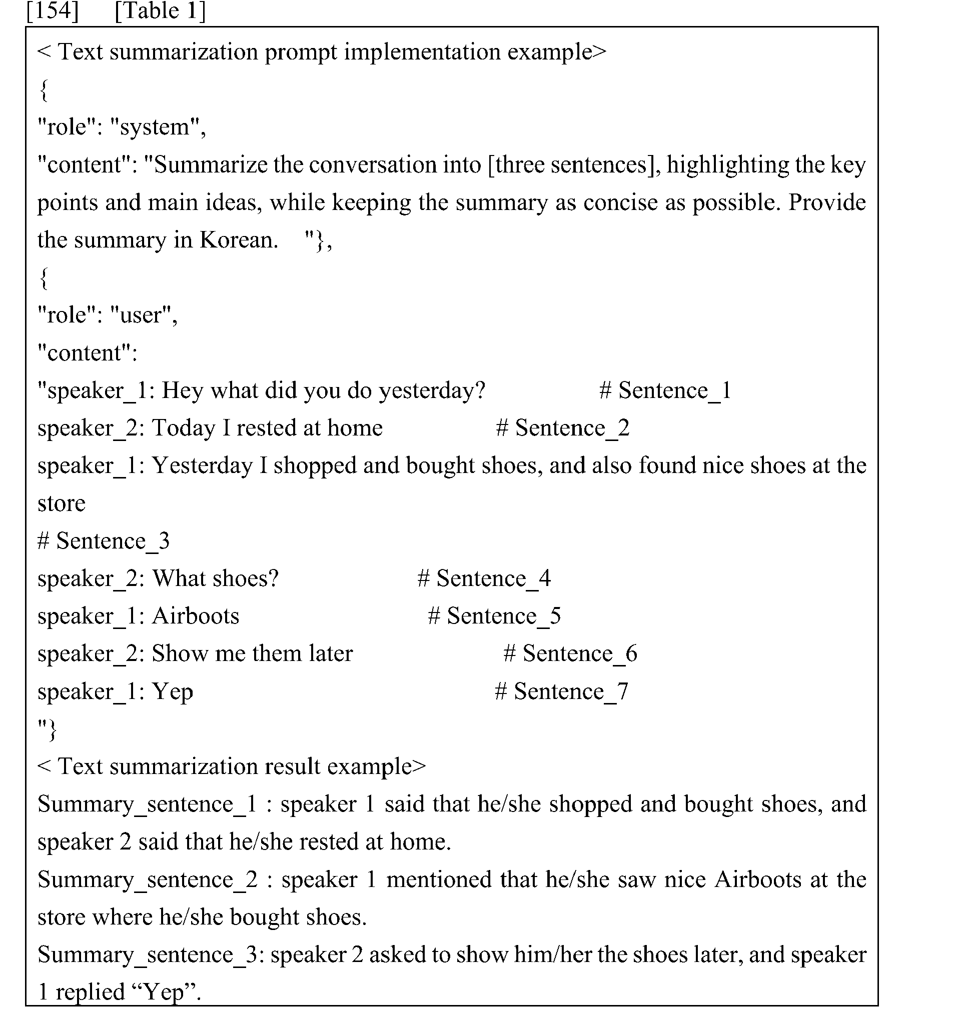

According to Table 1, the LLM may perform a command to receive the conversation between users as a text input and summarize the same into a designated number of sentences. Although Table 1 describes summarization into three sentences, this may vary depending on the configuration. According to an embodiment, the processor 120 may configure the LLM's prompt such that, based on the number of sentences of the text input to the LLM, the result is output after summarizing the same by a specific ratio or, based on the number of characters of the input text, the result is output after summarizing the same by a specific ratio or a predetermined number of sentences are output.

According to an embodiment, the processor 120 may determine, based on the phone number of a first user terminal having an established communication connection being stored in the memory, that the text summarization ratio of the first user terminal is a relatively low first level (e.g., about 10%). The processor 120 may determine, based on the phone number of a second user terminal having an established communication connection not being stored in the memory, that the text summarization ratio of the second user terminal is a second level (e.g., about 20%) relatively higher than the first level.

According to an embodiment, the processor 120 may not perform summarization for a designated period of time and may store the original data as it is. The designated period of time may vary depending on the configuration. The processor 120 may include information regarding the text summarization ratio in a prompt input to the LLM.

The processor 120 may classify persons, whose phone numbers are stored, as "acquaintances" and may determine that they are relatively highly likely to be recalled by the user after call record summarization. The processor 120 may apply a relatively low level of summarization ratio to the conversation record of counterparts, whose phone numbers are stored, such that the original data is preserved. Conversely, the processor 120 may classify persons, whose phone numbers are not stored, as "strangers" and may determine that they are relatively less likely to be recalled by the user after call record summarization. In this case, the processor 120 may apply a relatively high level of summarization ratio to the conversation record of counterparts, whose phone numbers are not stored, such that a relatively large storage space is secured in the memory 130.

According to an embodiment, the LLM may determine keywords corresponding to emotions by using an emotion recognition model (for example, the emotion recognition model 412 in FIG. 4A).

The LLM may perform keyword extraction 504 by receiving multiple summarized sentences 514 and keywords corresponding to emotions as inputs. The LLM may receive multiple summarized sentences 514 and keywords corresponding to emotions as inputs, and may output multiple keywords and emotion-related keywords 516. The LLM may generate keyword data (keyword data_1) 526, based on the multiple keywords and emotion-related keywords 516. The processor 120 may store keyword data (keyword data_1) 526 in the memory 130.

For keyword extraction, the LLM may generate a prompt as in Table 2, and may input summary data.

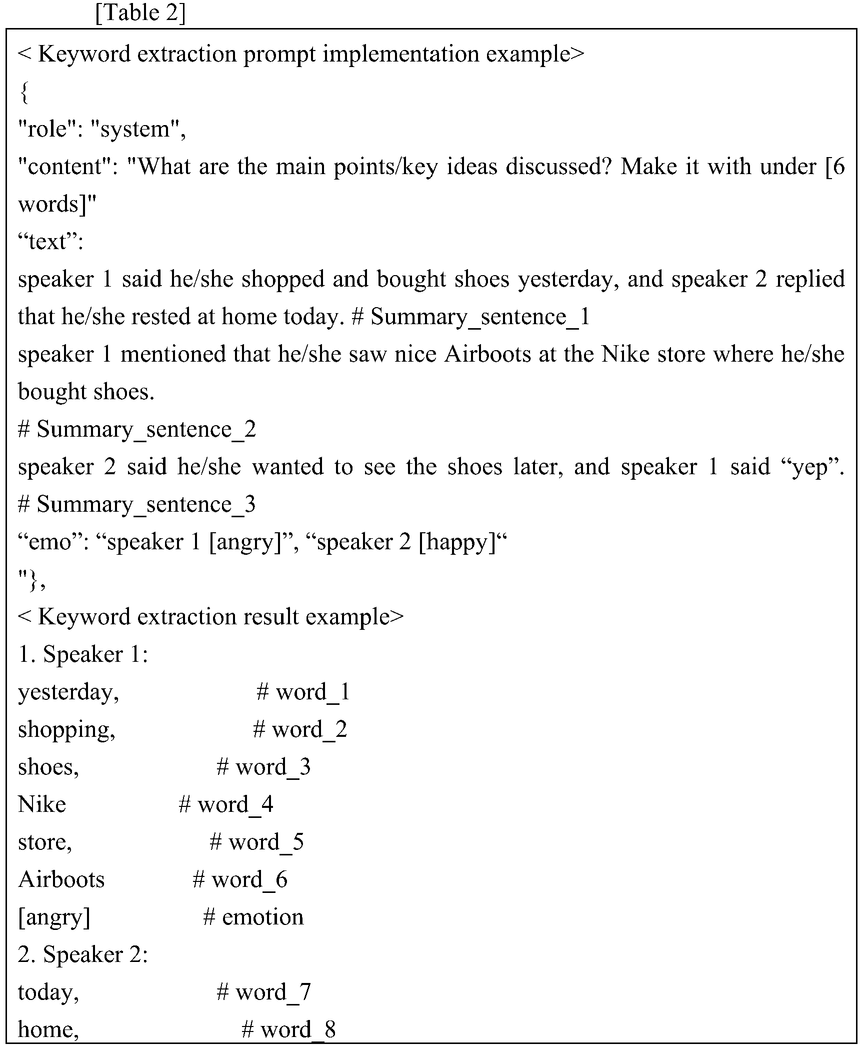

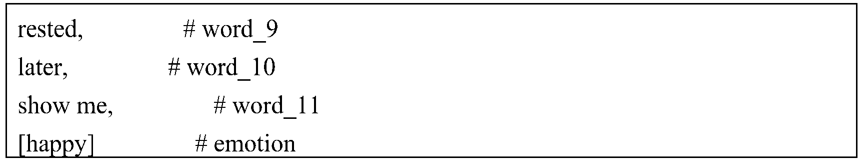

The LLM may determine the summarization ratio differently based on the relationship between users. According to an embodiment, the processor 120 may configure the prompt of the LLM such that, with reference to the number of words of text input to the LLM, keywords corresponding to a specific ratio are output, or a designated number of keywords are output.

According to an embodiment, the processor 120 may configure the prompt of the LLM such that, in a situation in which keyword information is output by using the LLM, information related to the utterance of the user of the electronic device 101 and information related to the utterance of other people are distinguished, and different compression ratios are applied to information related to the utterance of the user of the electronic device 101 and information related to the utterance of other people, respectively.

According to an embodiment, the processor 120 may compress information related to the utterance of the user of the electronic device to a relatively low level and output keywords. The processor 120 may configure the prompt of the LLM to compress information related to the utterance of others to a relatively high level in comparison with information related to the utterance of the user of the electronic device 101 and to output keywords.

According to an embodiment, the processor 120 may determine, based on the phone number of a first user terminal having an established communication connection being stored in the memory, that the keyword compression ratio of the first user terminal is a relatively low first level (e.g., about 5%). The processor 120 may determine, based on the phone number of a second user terminal having an established communication connection not being stored in the memory, that the keyword compression ratio of the second user terminal is a second level (e.g., about 10%) relatively higher than the first level.

The processor 120 may classify persons, whose phone numbers are stored, as "acquaintances" and may determine that they are relatively highly likely to be recalled by the user after call record summarization. The processor 120 may apply a relatively low level of compression ratio to the conversation record of counterparts, whose phone numbers are stored, such that the original data is preserved. Conversely, the processor 120 may classify persons, whose phone numbers are not stored, as "strangers" and may determine that they are relatively less likely to be recalled by the user after call record summarization. In this case, the processor 120 may apply a relatively high level of compression ratio to the conversation record of counterparts, whose phone numbers are not stored, such that a relatively large storage space is secured in the memory 130.

According to FIG. 5B, the LLM may perform text summarization and keyword extraction by receiving second data (raw data_2) 520, summary data (summary data_1) 524, and keyword data (keyword data_1) 526 as inputs.

According to FIG. 5B, the LLM may receive the user's second data (raw text_2) 520 as input and may perform text summarization and keyword extraction. The LLM may display the second data (raw text_2) 520 as text composed of multiple sentences 530 by using the ASR module. The LLM may perform text summarization with regard to multiple sentences 530 and may generate multiple summarized sentences 532. The LLM may generate summary data (summary data_2) 542 based on multiple summarized sentences 532. The processor 120 may store summary data (summary data_2) 542 in the memory (for example, the memory 130 in FIG. 1).

According to an embodiment, the LLM may perform additional summarization by bundling some pieces of summary data as a designated time has passed. The LLM may perform additional summarization regardless of whether new conversation data is input. The LLM may perform additional summarization to make the data stored in the memory 130 relatively smaller in capacity.

According to an embodiment, the LLM may determine keywords corresponding to emotions by using an emotion recognition model (for example, the emotion recognition model 412 in FIG. 4A).

The LLM may perform keyword extraction by receiving multiple summarized sentences 532 and keywords corresponding to emotion as inputs. The LLM may receive multiple summarized sentences 532 and keywords corresponding to emotions as inputs and may output multiple keywords and keywords 534 regarding emotions. The LLM may generate keyword data (keyword data_2) 544, based on multiple keywords and keywords 534 regarding emotions. The processor 120 may store keyword data (keyword data_2) 544 in the memory 130.

The LLM may receive summary data (summary data_2) 542 and keyword data (keyword data_2) 544 as inputs, perform learning, and configure a new artificial intelligence learning model 550.

In order to generate a response to a user question, the LLM may generate a prompt as in Table 3 and may input summary data.

**[Table 3]**

| |
|---|
| < Response generation prompt implementation example> |
| { |
| "role": "system", |
| "content": "Answer the text content based on the user's question." |
| "users" : "What did we talk about last Marth 26^{th}? |
| "text": |
| Marth 26^{th}, 2023, speaker 1 expressed frustration about shoes bought when. |
| Speaker 2 said he/she rested at home today and wanted to see the shoes later. |
| April 12^{th}, 2023, speaker_1 and speaker_3 meet after a while and ask each other whether they are doing well, and mention a planned trip to Germany and Switzerland in March. Speaker_3 says he/she feels like shopping and asks company, and speaker_1 asks which item he/she wants to buy. Speaker_3 asks clothes recommendations, and speaker_1 promises to send recommendations through Kakao Talk. |
| } |
| < Answer prompt result example> |
| Last Marth 26^{th}, speaker 1 expressed frustration about shoes bought during shopping, speaker 2 said he/she rested at home today and wanted to see the shoes. |
| Therefore, there was a talk about shoes Marth 26^{th}. |

According to Table 3, the LLM may recognize the user's question and perform a command to answer the same. The LLM may identify a word corresponding to the date or time from the user's question (e.g., "What did we talk about last March 26^{th}?"). The LLM may identify summary data corresponding to the date or time in the memory 130, based on the word corresponding to the date or time. The LLM may generate and output an answer to the user's question by using the summary data corresponding to the date or time. In order to generate a question, the LLM may generate a prompt as in Table 4 and input keyword data.

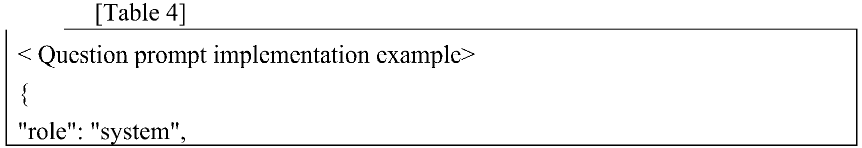

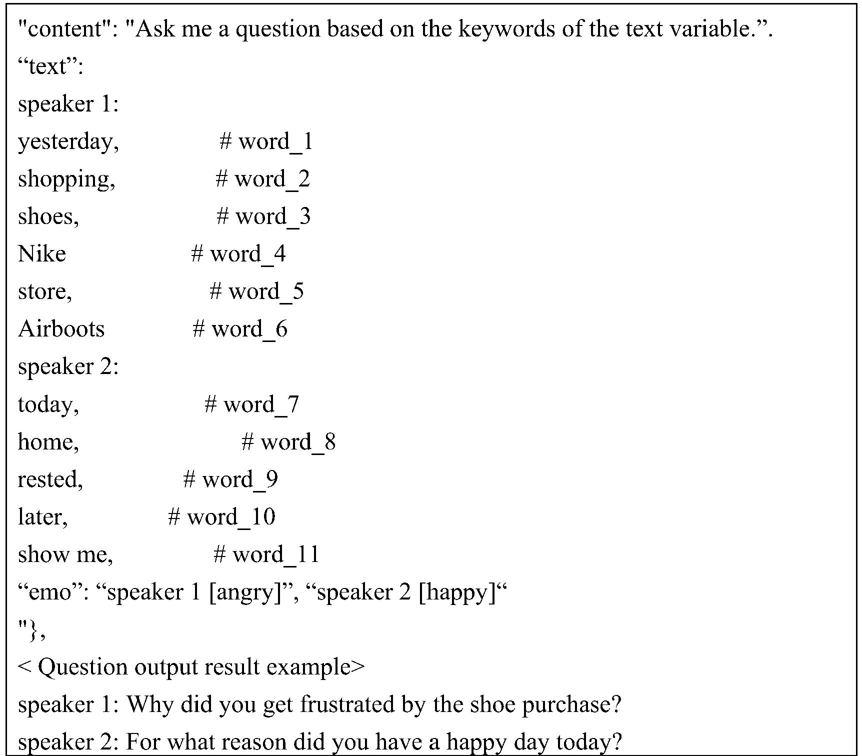

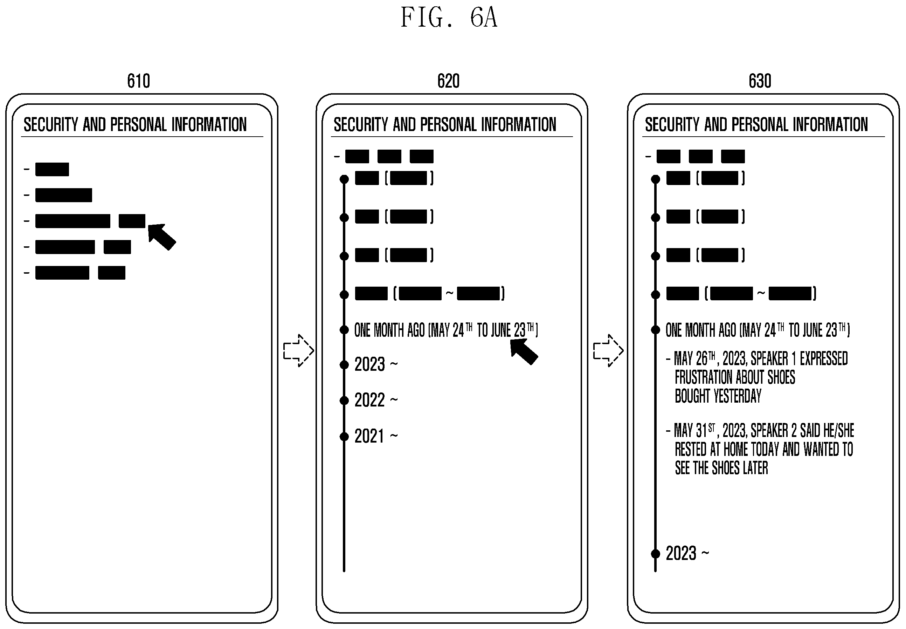

According to Table 4, the LLM may perform a command to generate a question, based on multiple keywords. The LLM may generate a question by using keywords regarding the user's conversations or messages, which are stored in the memory 130 by date. The LLM may generate a question by also using emotion keywords regarding the user's conversations or messages. FIG. 6A illustrates a situation in which summary data stored by date is displayed on an electronic device according to an embodiment.

Referring to picture 610, the electronic device (e.g., the electronic device 101 in FIG. 1) may display items regarding security and personal information on the display. The items regarding security and personal information may include, for example, accounts, lock screen, finding my device, my conversation record, and personal information protection items. The "my conversation record" item may include call records or message records of the user of the electronic device 101.

In case that the user's call record or message record is stored without modification, exposure of the stored information to the outside may cause a privacy issue for the user. In addition, the user may have difficulty in finding necessary information because the amount of call records or message records without modification is large.

The electronic device 101 according to the disclosure may perform a process of summarization and keyword extraction with regard to the user's call record or message record, and may store the conversation record, based on information regarding the time where the call record or message record is made.

Referring to picture 620, the electronic device 101 may display conversation records classified by date. The displayed date may indicate the time period for which the conversation record has been stored. Based on sensing a user input on an object regarding a displayed date, the electronic device 101 may display multiple items corresponding to the displayed date (e.g., texts input on the displayed date, or summary texts generated on the displayed date). The date may be displayed on a daily, weekly, or monthly basis, or for a configured period of time.

Referring to picture 630, based on a user input regarding a specific date, the electronic device 101 may display summary data of the corresponding date.

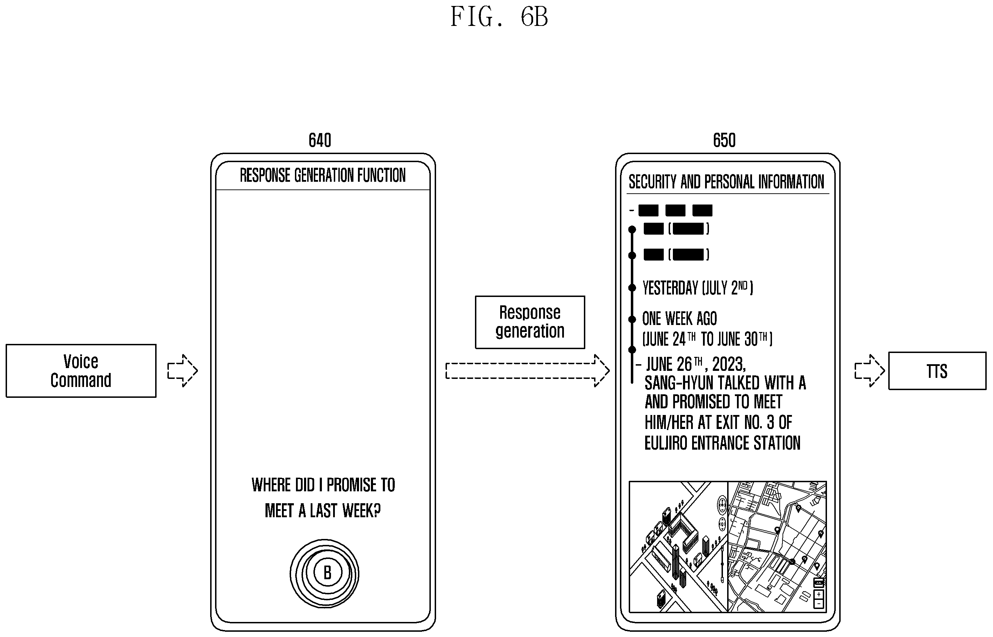

FIG. 6B illustrates a process in which an electronic device according to an embodiment recognizes a user's question and generates a response by using summary data stored by date.

Referring to picture 640 in FIG. 6B, the electronic device 101 may recognize the user's speech. The electronic device 101 may convert the user's speech to text using an ASR model and may display the same on the display.

The electronic device 101 may input the user's speech to an artificial intelligence learning model (e.g., the LLM in FIG. 5A). The LLM may identify summary data of the corresponding date, based on a mention of a specific date in the user's speech.

Referring to picture 650, the LLM may generate a response to the user question, based on summary data corresponding to the specific date mentioned in the user's speech.

FIG. 7 is a diagram 700 for describing operations of an electronic device (e.g., the electronic device 101 in FIG. 2) based on a personalized automatic speech recognition model according to various embodiments.

According to various embodiments, the personalized automatic speech recognition model may include a personalized automatic speech recognition model for recognizing utterance speech of a designated user and/or a wakeup speech recognition model for recognizing utterance speech (e.g., a wakeup word) regarding text including at least one designated word of the designated user.

According to an embodiment, the electronic device 101 may execute an intelligent app to process a user input through a smart server (e.g., the server 108 in FIG. 1).

According to an embodiment, on screen 710, the electronic device 101 may execute an intelligent app for processing a speech input upon recognizing a designated speech input (e.g., "wake up!") by using a personalized automatic speech recognition model including a wakeup speech recognition model, or upon receiving an input through a hardware key (e.g., a dedicated hardware key). The electronic device 101 may execute an intelligent app while, for example, a schedule app is executed.

According to an embodiment, the electronic device 101 may display an object (e.g., an icon) 711 corresponding to the intelligent app on the display (e.g., the display module 160 in FIG. 1). According to an embodiment, the electronic device 101 may receive a speech input caused by user utterance. For example, the electronic device 101 ay receive a speech input "Let me know this week's schedule!". According to an embodiment, the electronic device 101 may recognize a speech input received by using the personalized automatic speech recognition model, and may convert the received speech input to text. According to an embodiment, the electronic device 101 may display, on the display, a user interface (UI) 713 (e.g., an input window) of the intelligent app on which text data of the received speech input is displayed.

According to an embodiment, on screen 720, the electronic device 101 may display, on the display, a result corresponding to the received speech input. For example, the electronic device 101 may receive an operation processing result corresponding to the received user input from the server 108. Alternatively, the electronic device 101 may determine the same and display "this week's schedule" on the display according to the received or determined operation processing result.

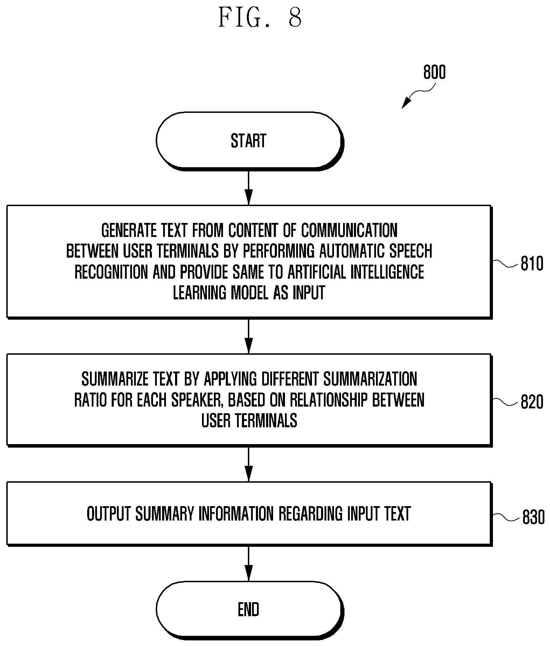

FIG. 8 is a flowchart illustrating a method for generating a prompt for learning of an electronic device according to an embodiment.

The operations described with reference to FIG. 8 may be implemented based on instructions that may be stored in a computer recording medium or memory (e.g., the memory 130 in FIG. 1). The illustrated method 800 may be executed by the electronic device 101 described above with reference to FIG. 1 to FIG. 7, and technical features described above will be omitted below. The order of respective operations in FIG. 8 may be changed, and some operations may be omitted or some operations may be performed in parallel.

In operation 810, the processor (for example, the processor 120 in FIG. 1) may generate text using an automatic speech recognition module and may provide the same as an input to an artificial intelligence learning model (for example, the LLM in FIG. 5A).

In operation 820, the LLM may summarize the text by applying a different summarization ratio for each speaker, based on the relationship between user terminals.

According to an embodiment, the processor 120 may configure the prompt of the LLM such that, with reference to the number of sentences of the text input to the LLM, the same is summarized by a specific ratio, thereby outputting the result, or with reference to the number of characters of the input text, the same is summarized by a specific ratio, thereby outputting the result, or a predetermined number of sentences are output.

According to an embodiment, the processor 120 may determine, based on the phone number of a first user terminal having an established communication connection being stored in the memory, that the text summarization ratio of the first user terminal is a relatively low first level (e.g., about 10%). The processor 120 may determine, based on the phone number of a second user terminal having an established communication connection not being stored in the memory (e.g., the memory 130 in FIG. 1), that the text summarization ratio of the second user terminal is a second level (e.g., about 20%) relatively higher than the first level. The first and second levels are merely examples and may vary depending on the configuration.

The processor 120 may classify persons, whose phone numbers are stored, as "acquaintances" and may determine that they are relatively highly likely to be recalled by the user after call record summarization. The processor 120 may apply a relatively low level of summarization ratio to the conversation record of counterparts, whose phone numbers are stored, such that the original data is preserved. Conversely, the processor 120 may classify persons, whose phone numbers are not stored, as "strangers" and may determine that they are relatively less likely to be recalled by the user after call record summarization. In this case, the processor 120 may apply a relatively high level of summarization ratio to the conversation record of counterparts, whose phone numbers are not stored, such that a relatively large storage space is secured in the memory 130.

In operation 830, the LLM may output summary information regarding the input text. In addition, the LLM may output emotion information corresponding to the input text.

According to an embodiment, the LLM may determine keywords corresponding to emotions by using an emotion recognition model (for example, the emotion recognition model 412 in FIG. 4A).

In operation 840, the LLM may output keyword information.

The LLM may receive multiple summarized sentences (e.g., the multiple summarized sentences 514 in FIG. 5A) and keywords corresponding to emotions as inputs and may perform keyword extraction (e.g., keyword extraction 504 in FIG. 5A). The LLM may receive the input text, multiple summarized sentences 514, and keywords corresponding to emotion as inputs and may output multiple keywords and emotion-related keywords (e.g., the keyword 516 in FIG. 5A). The LLM may generate keyword data (keyword data_1) (e.g., the keyword data 526 in FIG. 5A) based on multiple keywords and emotion-related keywords 516. The processor 120 may store keyword data (keyword data_1) 526 in the memory 130.

The LLM may determine the summarization ratio differently based on the relationship between users. According to an embodiment, the processor 120 may configure the prompt of the LLM such that, with reference to the number of words of text input to the LLM, keywords corresponding to a specific ratio are output, or a designated number of keywords are output.

According to an embodiment, the processor 120 may configure the prompt of the LLM such that, in a situation in which keyword information is output by using the LLM, information related to the utterance of the user of the electronic device 101 and information related to the utterance of other people are distinguished, and different compression ratios are applied to information related to the utterance of the user of the electronic device 101 and information related to the utterance of other people, respectively.

According to an embodiment, the processor 120 may compress information related to the utterance of the user of the electronic device to a relatively low level and output keywords. The processor 120 may configure the prompt of the LLM to compress information related to the utterance of others to a relatively high level in comparison with information related to the utterance of the user of the electronic device 101 and to output keywords.

According to an embodiment, the processor 120 may store summary information in the memory 130 for a relatively short first period of time, and may store keyword information in the memory 130 for a second period of time which is longer than the first period of time. Since personal information may cause a privacy problem if leaked, the storage period thereof may be limited. The summary information may be configured to have a shorter retention period than the keyword information, because the summary information contains relatively more private information compared to the keyword information. The first and second periods of time may vary depending on the configuration.

According to an embodiment, the processor 120 may classify and store keyword information by using at least one of emotion, date, or name as a criterion.

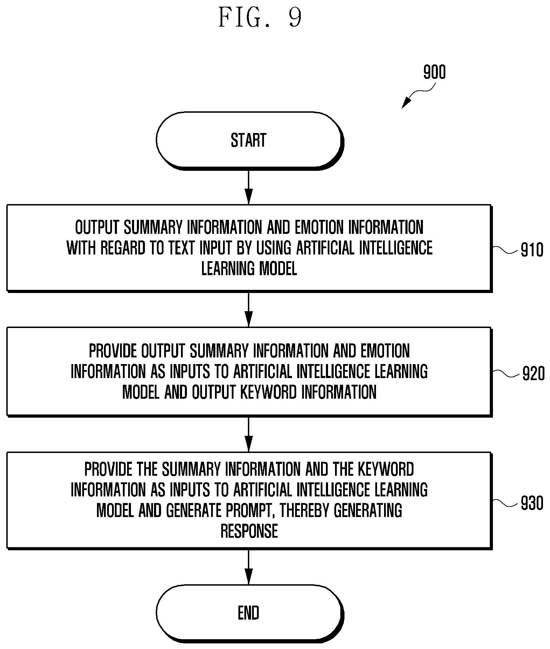

FIG. 9 is a flowchart illustrating a method for generating a prompt for learning of an electronic device according to an embodiment.

The operations described with reference to FIG. 9 may be implemented based on instructions that may be stored in a computer recording medium or memory (e.g., the memory 130 in FIG. 1). The illustrated method 800 may be executed by the electronic device 101 described above with reference to FIG. 1 to FIG. 7, and technical features described above will be omitted below. The order of respective operations in FIG. 8 may be changed, and some operations may be omitted or some operations may be performed in parallel.

In operation 910, the processor (e.g., the processor 120 in FIG. 1) may output summary information and emotion information with regard to speech or text input from the user by using an artificial intelligence learning model (e.g., the LLM in FIG. 5A).

In operation 920, the processor 120 may provide the output summary information and emotion information as inputs to an artificial intelligence learning model and may output keyword information.

In operation 930, the processor 120 may provide the summary information and the keyword information to the LLM as inputs and may generate a prompt. The processor 120 may generate a prompt, based on summary information, in response to an input regarding a user query (e.g., "What happened last March 26^{th}?"). The processor 120 may generate a response to the user query by using the generated prompt.

According to an embodiment, the processor 120 may store the output summary information, emotion information, and keyword information in the LLM together with the date and time period when the text has been input to the LLM. The processor 120 may store the output summary information, emotion information, and keyword information in the memory (for example, the memory 130 in FIG. 1).

According to an embodiment, the processor 120 may configure the prompt of the LLM to generate text by using automatic speech recognition (ASR) module (e.g., the ASR module 122 in FIG. 2) in response to the user's question, to identify summary information generated at the corresponding date or time, based on detecting a word corresponding to one of the date or time in the generated text, and to generate a sentence based on summary information generated at the corresponding date or time.

According to an embodiment, the processor 120 may configure the prompt of the LLM to generate a sentence, based on keyword information and emotion information stored within a preconfigured period with reference to the current timepoint, and to output the generated sentence as speech, based on the user of the electronic device 101 activating an assistant function of the electronic device 101.

According to an embodiment, the processor 120 may store summary information in the memory 130 for a relatively short first period of time, and may store keyword information in the memory 130 for a second period of time which is longer than the first period of time. Since personal information may cause a privacy problem if leaked, the storage period thereof may be limited. The summary information may be configured to have a shorter retention period than the keyword information, because the summary information contains relatively more private information compared to the keyword information. The first and second periods of time may vary depending on the configuration.

Embodiments disclosed in the document are presented as examples to facilitate description of technicality and help understanding thereof, and are not intended to limit the scope of the technology disclosed in the document. Therefore, the scope of the technology disclosed in the document should be interpreted as including all modifications or variations derived based on the technical idea of various embodiments disclosed in the document, in addition to the embodiments described herein. above.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
at least one processor (120);
a memory (130) configured to store one or more instructions; and
an artificial intelligence learning model (430),
wherein the one or more instructions, based on being executed by the at least one processor, control the electronic device to:
perform automatic speech recognition to generate text from content of conversation between the user terminals, and provide generated text and/or messages exchanged between user terminals to the artificial intelligence learning model as inputs;
apply a different summarization ratio to each speaker, based on the relationship between user terminals, in a process of summarizing input text by the artificial intelligence learning model; and
output summary information regarding input text by using the artificial intelligence learning model.

2. The electronic device of claim 1, wherein the one or more instructions, based on being executed by the at least one processor, control the electronic device to configure a prompt of the artificial intelligence learning model to:
output emotion information regarding input text by using the artificial intelligence learning model;
provide output summary information and emotion information again to the artificial intelligence learning model as inputs, generate a prompt, and output keyword information;
output a result of summarization by a specific ratio with reference to the number of sentences of text input to the artificial intelligence learning model; or
output a result of summarization by a specific ratio with reference to the number of characters of input text; or
output a preconfigured number of sentences.

3. The electronic device of claim 2, wherein the one or more instructions, based on being executed by the at least one processor, control the electronic device to:
determine, based on the telephone number of a first user terminal having an established communication connection being stored in the memory, that the text summarization ratio of the first user terminal is a relatively low first level; and
determine, based on the telephone number of a second user terminal having an established communication connection not being stored in the memory, that the text summarization ratio of the second user terminal is a second level relatively higher than the first level.

4. The electronic device of claim 2, wherein the one or more instructions, based on being executed by the at least one processor, control the electronic device to configure a prompt of the artificial intelligence learning model to output keywords corresponding to a specific ratio with reference to the number of words of text input to the artificial intelligence learning model, or output a designated number of keywords.

5. The electronic device of claim 4, wherein the one or more instructions, based on being executed by the at least one processor, control the electronic device to configure a prompt of the artificial intelligence learning model to:
in a situation in which keyword information is output by using the artificial intelligence learning model, distinguish information related to utterance of the user of the electronic device and information related to utterance of others; and
apply different compression ratios to information related to utterance of the user of the electronic device and information related to utterance of others, respectively.

6. The electronic device of claim 5, wherein the one or more instructions, based on being executed by the at least one processor, control the electronic device to configure a prompt of the artificial intelligence learning model to:
compress information related to utterance of the user of the electronic device to a relatively low level and output a keyword; and
compress information related to utterance of others to a relatively high level in comparison with information related to utterance of the user of the electronic device, and output a keyword.

7. The electronic device of claim 5, wherein the one or more instructions, based on being executed by the at least one processor, control the electronic device to:
determine, based on the telephone number of a first user terminal having an established communication connection being stored in the memory, that the keyword compression ratio of the first user terminal is a relatively low first level; and
determine, based on the telephone number of a second user terminal having an established communication connection not being stored in the memory, that the keyword compression ratio of the second user terminal is a second level relatively higher than the first level.

8. An electronic device comprising:
at least one processor;
a memory configured to store one or more instructions; and
an artificial intelligence learning model,
wherein the one or more instructions, based on being executed by the at least one processor, control the electronic device to:
output summary information and emotion information with regard to text input to the artificial intelligence learning model;
provide output summary information and emotion information again to the artificial intelligence learning model as inputs and output keyword information; and
provide the summary information and the keyword information again to the artificial intelligence learning model as inputs, generate a prompt, and generate a response to a user's question and/or generate a question regarding the user of the electronic device.

9. The electronic device of claim 8, wherein the one or more instructions, based on being executed by the at least one processor, control the electronic device to store output summary information, emotion information, and keyword information together with the date and time period when text is input to the artificial intelligence learning model.

10. The electronic device of claim 9, wherein the one or more instructions, based on being executed by the at least one processor, control the electronic device to configure a prompt of the artificial intelligence learning model to:
generate text by using an automatic speech recognition (ASR) module (122) with regard to a user's question;
based on detecting a word corresponding to one of the date or time in the generated text, identify summary information generated at the corresponding date or time; and
generate a sentence, based on summary information generated at the corresponding date or time.

11. The electronic device of claim 9, wherein the one or more instructions, based on being executed by the at least one processor, control the electronic device to configure a prompt of the artificial intelligence learning model to:
generate a sentence, based on keyword information and emotion information stored within a preconfigured period of time with reference to the current timepoint; and
output the generated sentence as speech, based on the user of the electronic device activating an assistance function of the electronic device.

12. The electronic device of claim 8, wherein the one or more instructions, based on being executed by the at least one processor, control the electronic device to:
store the summary information in the memory for a relatively short first period of time; and
store the keyword information in the memory for a second period of time which is relatively longer than the first period of time.

13. The electronic device of claim 8, wherein the one or more instructions, based on being executed by the at least one processor, control the electronic device to classify and store keyword information by using at least one of emotion, date, or name as a criterion.

14. A method for operating an electronic device, the method comprising:
performing an automatic speech recognition function with regard to content of conversation between user terminals to generate text from content of conversation between user terminals;
providing generated text and/or messages exchanged between user terminals to an artificial intelligence learning model as inputs;
applying a different summarization ratio to each speaker, based on the relationship between user terminals, in a process of summarizing input text by the artificial intelligence learning model;
outputting summary information regarding input text and emotion information corresponding to input text by using the artificial intelligence learning model; and
providing output summary information and emotion information again to the artificial intelligence learning model as inputs, thereby outputting keyword information by using a preconfigured prompt.

15. The method of claim 14, further comprising configuring a prompt of the artificial intelligence learning model to:
output a result of summarization by a specific ratio with reference to the number of sentences of text input to the artificial intelligence learning model; or
output a result of summarization by a specific ratio with reference to the number of characters of input text; or
output a preconfigured number of sentences.
